# EUROPEAN PATENT SPECIFICATION

(11) **EP 2 480 095 B1**
(45) Date of publication and mention of the grant of the patent: **14.08.2013**
(21) Application number: 10766322.1
(22) Date of filing: 21.09.2010
(51) Int. Cl.: A23G 9/28

(54) **APPARATUS FOR DISPENSING FOOD PRODUCT**
VORRICHTUNG ZUR AUSGABE EINES LEBENSMITTELPRODUKTS
APPAREIL DE DISTRIBUTION DE PRODUIT ALIMENTAIRE

(30) Priority: 22.09.2009 US 244505 P; 22.09.2009 GB 0916618
(43) Date of publication of application: 01.08.2012
(73) Proprietor: McGill Technology Limited, West Malling, Kent ME19 4YU (GB)
(72) Inventor: McGILL, Shane, West Malling Kent ME19 4YU (GB)
(74) Representative: McWilliams, David John
(86) International application number: PCT/GB2010/051578
(87) International publication number: WO 2011/036477

(56) References cited:
- EP-A1- 0 213 709
- WO-A1-01/60173
- WO-A2-2007/121967
- US-A- 5 918 767

## Description

The present invention relates to apparatus for dispensing food product, in particular frozen or semi-frozen confections such as ice cream and sorbet.

A commercially successful ice cream dispensing apparatus is described and illustrated in US patent 5,918,767. The apparatus includes a holder for a container of ice cream and a plunger operable to extrude ice cream from the container. Conveniently, the holder is mounted on a hinged support, so as to be movable between a loading position for inserting the container into or removing it from the holder and a dispensing position for dispensing ice cream from the container via the plunger.

The apparatus includes a dispensing mechanism for controlling movement of the plunger. In particular, the dispensing mechanism includes a linear actuator having an output member which is movable from a retracted position to an extended position in order to drive the plunger in a dispensing direction. The linear actuator is mounted directly above the plunger, thereby increasing the height of the apparatus, in particular the dispensing head.

It is an object of the invention to provide a more compact dispensing apparatus.

According to one aspect of the present invention, there is provided an apparatus for dispensing food product, in particular frozen or semi-frozen confections such as ice cream and sorbet, including a holder for receiving a container of product to be dispensed and a plunger arranged for movement between a retracted position and an extended position for extruding product from a container received in the holder, the apparatus further including an actuator for controlling movement of the plunger between the retracted and extended positions, the actuator having an output member arranged to move from an extended position to a retracted position in order to drive the plunger from its retracted position to its extended position for a dispensing operation.

Hence, the actuator is configured for operation in an opposite manner to the conventional dispensing apparatus known from US patent 5,918,767, i.e. an apparatus in accordance with the invention has an actuator which retracts in order to extrude.

Arranging the actuator in this way (i.e. retracting when dispensing) allows for a more compact apparatus, particularly with regard to the height of the apparatus above the normal operating position of the holder.

The apparatus is particularly suited for use with containers having an outlet through which product can be extruded, e.g. via inward deformation or movement of part of the container in order to reduce the internal volume of the container. An example of such containers is shown in US patent 5,918,767, wherein an upper part of a container is configured to deform into a lower part of the container, the lower part having an outlet through which product can be extruded upon inward deformation of the upper part. Another suitable container consists of a cylinder having an outlet at one end and a movable piston at the other end, wherein the piston is movable in the direction of the outlet for extruding product through the outlet.

The output member and plunger have respective axes of movement and in preferred embodiments these axes are off set from one another. This allows for a particularly compact apparatus. For example, in a particularly preferred embodiment, the apparatus has a front face and the axis of movement of the actuator is off set to the rear of the axis of movement of the plunger, with respect to the front face of the apparatus.

A particularly preferred compact assembly is provided using a linkage arranged for operative communication between the plunger and the output member, wherein the output member is arranged to push the linkage in order to move the plunger to its retracted position and to pull the linkage in order to drive the plunger to its extended position.

The linkage may take the form of a cantilever movable about a fixed pivot in response to movement of the output member, in which case it is preferred if a first end of the linkage is pivotably connected at a fixed pivot, a second end of the linkage is pivotably coupled to the plunger, and the output member is coupled to the linkage between said first and second ends.

In preferred embodiments, the pivotable coupling between the linkage and the plunger includes an elongate slot and pin coupling, wherein the pin is movably received in the slot and the slot moves relative to the pin during movement of the linkage.

Preferably the output member is arranged for downward movement, to drive the plunger from its retracted position to the extended position for dispensing purposes. The actuator is preferably a linear actuator wherein the output member is arranged for reciprocation along a fixed linear axis.

In preferred embodiments, the actuator has a body which is arranged for movement in the event that product within a container in the holder is too hard to be dispensed by the plunger, the apparatus including a safety switch to cut power to the actuator in the event of movement of the actuator above a predetermined threshold.

Another aspect of the invention provides a method of dispensing food product, in particular frozen or semi-frozen confections such as ice cream and sorbet, the method comprising the steps of positioning a container of product to be dispensed in a holder, and moving a plunger from a retracted position to an extended position for extruding product from an outlet in the container, the method further including the step of using an actuator to control movement of the plunger between the retracted and extended positions, wherein the actuator has an output member which is arranged for movement from an extended position to a retracted position in order to drive the plunger to its extended position.

A further aspect of the invention provides apparatus for dispensing food product, in particular frozen or semi-frozen confections such as ice cream and sorbet, the apparatus including a seating for receiving a container of product to be dispensed, and a dispensing head in which a plunger is located for movement between a retracted position and an extended position for extruding product from a container received on the seating, the apparatus further including an actuator having an output member movable for controlling movement of the plunger between the retracted and extended positions, wherein the axis of movement of the plunger between said retracted and extend positions is offset from the axis of movement the output of the actuator.

A still further aspect of the invention provides a method of dispensing food product, in particular frozen or semi-frozen confections such as ice cream and sorbet, the method comprising the steps of positioning a container of product to be dispensed in a holder, and moving a plunger from a retracted position to an extended position for extruding product from an outlet in the container, the method further including the step of using an actuator to control movement of the plunger between the retracted and extended positions, wherein the axis of movement of the plunger between said retracted and extend positions is offset from the axis of movement the output of the actuator.

A further aspect of the invention provides apparatus for dispensing food product, in particular frozen or semi-frozen confections such as ice cream and sorbet, the apparatus including a seating for receiving a container of product to be dispensed, and a dispensing head in which a plunger is located for movement between a retracted position and an extended position for extruding product from a container received on the seating, the apparatus further including an actuator having an output member movable for controlling movement of the plunger between the retracted and extended positions, wherein the apparatus defines a housing having an upright compartment in which the actuator is located and wherein the dispensing head is located at a height generally above the actuator.

A still further aspect of the invention provides a method of dispensing food product, in particular frozen or semi-frozen confections such as ice cream and sorbet, the method comprising the steps of positioning a container of product to be dispensed in a holder, and moving a plunger from a retracted position to an extended position for extruding product from an outlet in the container, the method further including the step of using an actuator to control movement of the plunger between the retracted and extended positions, wherein the apparatus defines a housing having an upright compartment in which the actuator is located and wherein the dispensing head is located at a height generally above the actuator.

Other aspects and preferred features of the invention will be apparent from the following description of preferred embodiments, made by way of example only, with reference to the accompanying drawings, in which:
Figure 1 is a schematic front view of a dispensing apparatus in accordance with a preferred embodiment of the invention;
Figure 2 is a schematic side view of the dispensing apparatus of Figure 1;
Figure 3 is similar to Figure 1, but shows the container holder in a loading position;
Figure 4 is similar to Figure 2, but shows the container holder in a loading position;
Figure 5 is a schematic cross-section through line A-A in Figure 1; and
Figure 6 is similar to Figure 5, but shows the plunger in an extended position.

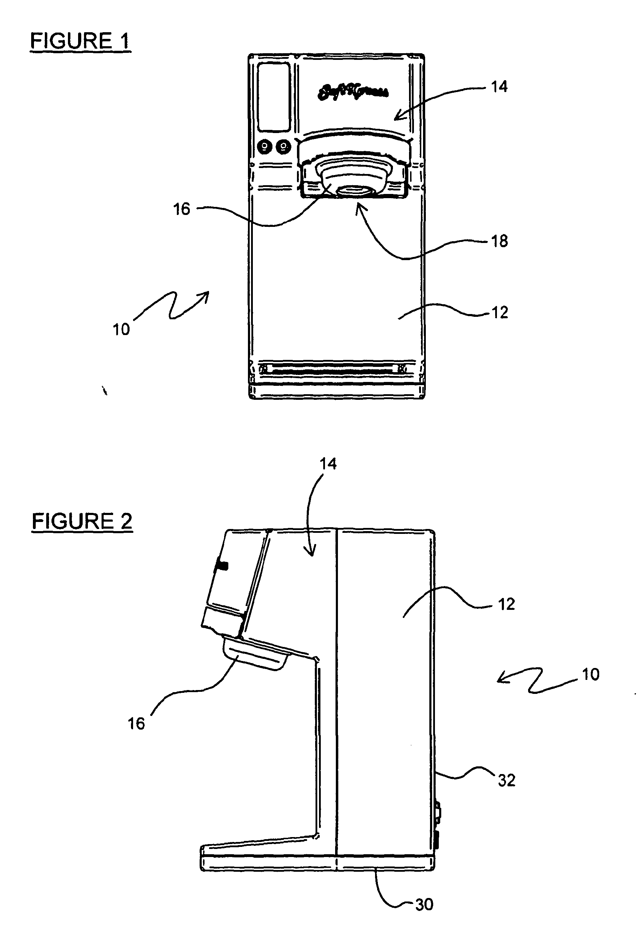

An apparatus for dispensing food product, in particular frozen or semi-frozen confections such as ice cream and sorbet, is indicated generally at 10 in Figures 1-4.

The apparatus 10 is in the form of a housing 12 for locating at a dispensing location, the housing including a dispensing head 14 having a holder or seating 16 for supporting a container of product to be dispensed, e.g. containers of the kind described and illustrated in US patent 5,918, 767. Preferred containers include an outlet through which product can be extruded, e.g. via inward deformation or movement of a part of the container in order to reduce the internal volume of the container. In US patent 5,918,767, an upper part of the container is configured to deform into a lower part of the container, the lower part having an outlet through which product can be extruded upon inward deformation of the upper part. Another suitable container consists of a cylinder having an outlet at one end and a movable piston at the other end, wherein the piston is movable in the direction of the outlet for extruding product through the outlet.

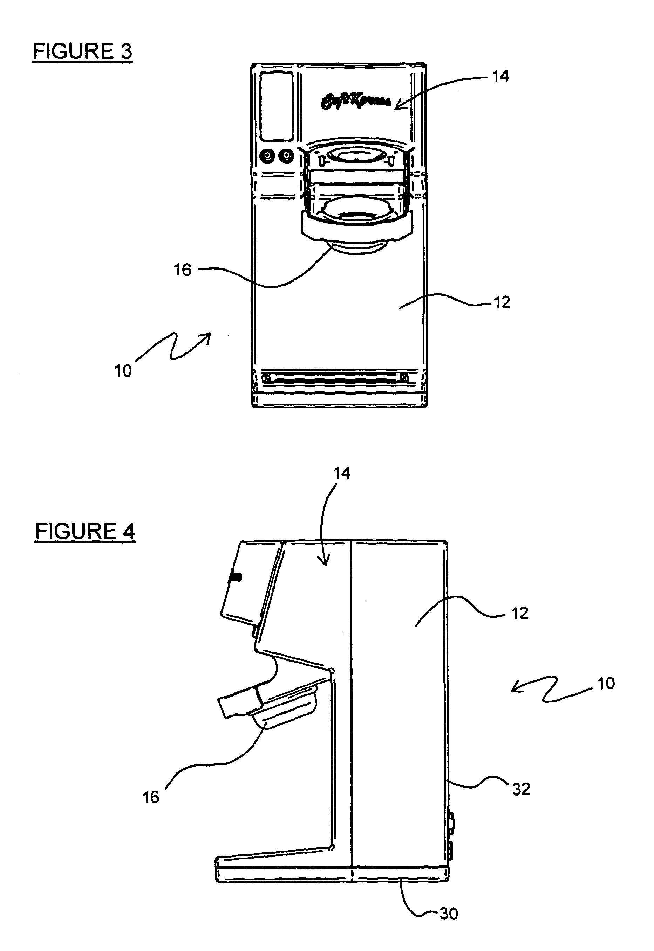

The holder 16 is pivotable about a horizontal axis between a dispensing position (as shown in Figures 1 and 2) for dispensing product from a container supported by the holder 16 and a loading position (as shown in Figures 3 and 4) for inserting a container into or removing it from the holder 16. Preferably, the apparatus 10 is configured so that it is not possible to remove or insert a container from the holder 16 in the dispensing position. Although not shown, a latching mechanism (e.g. a mechanical and/or electromagnetic latch) may be included for selectively securing the holder in the dispensing position.

The holder 16 includes an outlet 18 through which product can be dispensed. Preferably, the outlet 18 is positioned to correspond at least generally with the position of the container outlet.

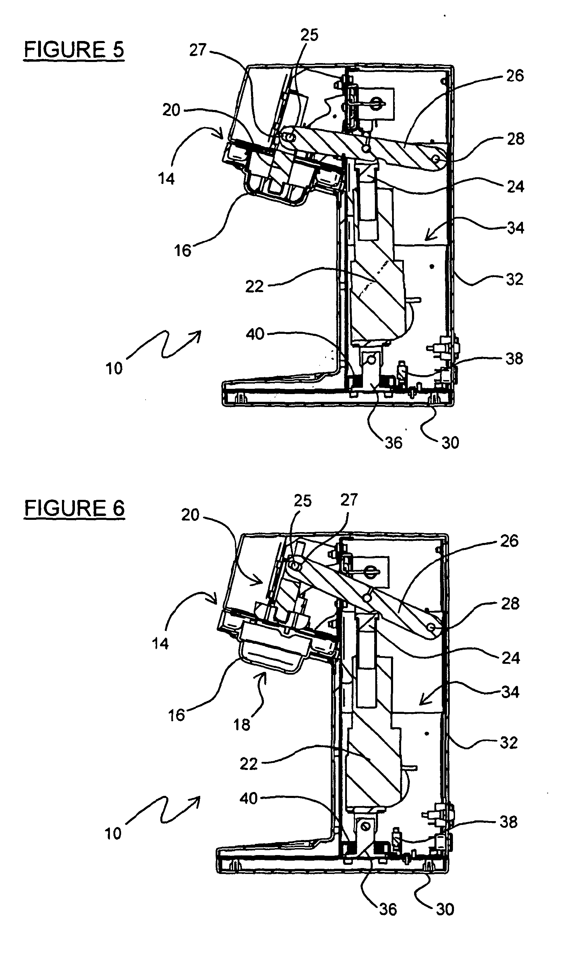

Turning now to Figures 5 and 6, the dispensing head 14 includes a plunger 20 arranged for reciprocating movement along an axis between a retracted position (Figure 5) and an extended position (Figure 6). The axis of movement of the plunger 20 is inclined from vertical in the illustrated embodiment, allowing for easier filling of a cone or other receptacle for product dispensed from the outlet 18.

To dispense product using the apparatus 10, the holder 16 is moved to the loading position, a suitable container of product is placed in the holder 16, the holder 16 is moved to the dispensing position and the plunger 20 is then moved from the retracted position to the extended position, whereby the plunger 20 pushes against a part of the container (thereby reducing the internal volume of the container) to cause product to be extruded from the container.

The apparatus 10 includes a dispensing mechanism for controlling movement of the plunger 20 between the retracted and extended positions. The dispensing mechanism includes an actuator 22 having an output member 24 arranged for downward movement in order to drive the plunger 18 to its extended position and upward movement to return the plunger 18 to its retracted position. In this embodiment, the actuator 22 is a linear actuator and the output member 24 is arranged vertically.

The apparatus 10 includes a movable linkage or arm 26 arranged for operative communication between the plunger 20 and the output member 24 of the actuator 22. One end of the linkage 26 is pivotably connected at a fixed pivot 28 whereby the linkage 26 serves as a cantilever. The opposite end of the linkage 26 is pivotably coupled with the plunger 20 and the output member 24 of the actuator 22 is pivotably connected to the linkage 26 between its two ends.

In this embodiment, the pivotably coupling between the plunger 20 and the linkage 26 takes the form of an elongate slot and pin coupling. This is seen most clearly in Figures 5 and 6, wherein the pin is indicated at 25 and is associated with the plunger 20, and the elongate slot is indicated at 27 and is provided in the linkage 26. The pin 25 is movably received in the slot 27 and the slot 27 moves relative to the pin 25 during movement of the linkage 26. This allows the plunger 20 to move along the required axis of dispensing during movement of the linkage 26.

The actuator 22 is arranged to push the linkage 26 (and thereby cause the linkage 26 to pivot in an anti-clockwise direction about the fixed pivot 28, as viewed in Figure 5) in order to move the plunger 20 to its retracted position and to pull on the linkage 26 (and thereby cause the linkage 26 to pivot in a clockwise direction about the fixed pivot 28, as viewed in Figure 6) in order to drive the plunger 20 to its extended position.

The apparatus 10 is similar in many respects to the apparatus described in US5,918,767. However, the dispensing mechanism described and illustrated herein provides for a more compact assembly, thus reducing the size of the machine (in particular, the height of the dispensing head), making the apparatus more suitable for domestic use (as well as reducing material costs etc).

It can be seen that the axis of movement of the output member 24 is off set from (i.e. not coaxial with) the axis of movement of the plunger 20. More particularly, if viewed from the front face of the apparatus 10, e.g. a shown in Figure 1, it would be understood that the axis of movement of the output member 24 is to the rear of the axis of movement of the plunger 20 with respect to the front face (clearly shown in Figure 5).

In the illustrated embodiment, the housing 12 includes a base 30 for standing the apparatus 10 on a work surface or other horizontal surface. Alternatively, a rear wall 32 of apparatus may be located on a wall or other vertical surface.

The apparatus 10 includes an upright compartment 34 in which the actuator 22 is housed. The dispensing head 14 is arranged at one end of the upright compartment 34 and is spaced above the base 30. The apparatus 10 defines a recess 31 between the base 30 and the dispensing head 14 into which a cone or other receptacle may be positioned for a dispensing operation.

The linkage 26 extends between the dispensing head 14 and the upright compartment 34. In this particularly compact arrangement, the actuator 22 is located generally below the dispensing head 14, thereby minimising the height of the apparatus 10 above the holder 16.

The apparatus 10 includes a safety mechanism for cutting power to the actuator 22. In the event that the plunger 20 is driven against a container in the holder 16 but the product to be dispensed is too hard to be extruded, reaction forces between the plunger 20 and the actuator 22 will cause the actuator 22 to rise in the compartment 34. The lower end of the actuator 22 is associated with a trip device 36 configured to trigger a cut off switch 38 in the event of undue upward movement of the actuator 22. In this embodiment, the trip device 36 is an inverted T-shaped member connected to the lower end of the actuator 22, a part of which extends for engagement with the switch 38. The trip device 36 is biased against upward movement by springs 40, wherein the springs are selected to yield at a predetermined upward force, in order to permit controlled upward movement of the actuator 22 at a predetermined level of product hardness. In other embodiments, the apparatus may include an electronic safety cut off arrangement, e.g. for measuring resistance to movement of the plunger.

The apparatus 10 includes a control panel and associated control circuitry indicated generally at 42, for automatic operation of the plunger 20. The control panel 42 includes a dispensing button 44 which, if selected, will activate the actuator 22 for a dispensing operation. However, the control circuitry is preferably configured to prevent activation of the actuator 22 if the holder 16 is not in the dispensing position.

The holder 16 is preferably locked against movement from the dispensing position by a latching mechanism (not shown) during movement of the plunger 20 and is preferably released from the dispensing position (e.g. so as to fall under gravity to the loading position) automatically after movement of the plunger 20 in the dispensing direction, so that the used container may be removed. Hence, a used container will be visible in the holder after dispensing, thereby reducing the likelihood of a used container being stored in the holder for an undesired time period.

The control circuitry is preferably configured to automatically retract the plunger after a dispensing operation.

The control panel 42 includes a manual release button 46 for releasing the holder 16 from the dispensing position. However, this is preferably operable only when the plunger is inactive and/or active in a return direction.

The control circuitry is preferably configured to activate a visual and/or audible alarm in the event that the cut off switch 38 is triggered. Preferably, the control circuitry is also configured to retract the plunger 20 after activation of the switch 38. The control circuitry may also be configured to allow the holder 16 to be moved to the loading position only after the plunger 20 has been fully retracted.

The control circuitry is preferably configured to operate a cleaning mode, wherein the plunger 20 can be moved to a fully extended position when the holder 16 is in the loading position. This mode is activated if both buttons 44, 46 are depressed for a set time period (e.g. 5 seconds) and the holder 16 is in the loading position.

The control circuitry may be configured so that a user can manually determine the volume of product to be dispensed, e.g. the actuator 22 may be operable only when pressure is applied to the dispensing button 44 or between a first activation of the button 44 (to start the actuator 22) and a second activation of the button 44 (to stop the actuator 22).

## Claims

1. Apparatus for dispensing food product, in particular frozen or semi-frozen confections such as ice cream and sorbet, the apparatus including a seating for receiving a container of product to be dispensed and a plunger arranged for movement between a retracted position and an extended position for extruding product from a container received on the seating, the apparatus further including an actuator for controlling movement of the plunger between the retracted and extended positions, the actuator having an output member arranged for movement from an extended position to a retracted position in order to drive the plunger to its extended position for a dispensing operation.

2. Apparatus according to claim 1 wherein the output member is arranged for upward movement to move the plunger to its retracted position.

3. Apparatus according to claim 1 or claim 2 further including a linkage arranged for operative communication between the plunger and the output member, wherein the output member is arranged to push the linkage in order to move the plunger to its retracted position and to pull the linkage in order to drive the plunger to its extended position, preferably wherein the linkage is a cantilever movable about a fixed pivot in response to movement of the output member, and/or preferably wherein a first end of the linkage is pivotably coupled to the plunger, a second end of the linkage is pivotably connected at a fixed pivot, and the output member is coupled to the linkage between said first and second ends.

4. Apparatus according to any of claims 1 to 3 wherein the output member and plunger have respective axes of movement which are off set from one another, preferably wherein the apparatus has a front face and wherein the axis of movement of the actuator is to the rear of the axis of movement of the plunger with respect to the front face.

5. Apparatus according to any preceding claim, wherein the apparatus defines a housing having an upright compartment in which the actuator is located and wherein the plunger is mounted in a dispensing head on said compartment, wherein the dispensing head is located at a height generally above the actuator.

6. Apparatus according to any preceding claim, wherein the actuator has a body which is arranged for movement in the event that product within a container in the holder is too hard to be dispensed by the plunger, the apparatus including a safety switch to cut power to the actuator in the event of movement of the actuator above a predetermined threshold, preferably wherein the lower end of the actuator is associated with a trip device configured to trigger a cut off switch in the event of undue upward movement of the actuator.

7. A method of dispensing food product, in particular frozen or semi-frozen confections such as ice cream and sorbet, the method comprising the steps of positioning a container of product to be dispensed in a holder, and moving a plunger from a retracted position to an extended position for extruding product from an outlet in the container, the method further including using an actuator to control movement of the plunger between the retracted and extended positions, the actuator having an output member arranged for movement from an extended position to a retracted position in order to drive the plunger to its extended position.

8. Apparatus for dispensing food product, in particular frozen or semi-frozen confections such as ice cream and sorbet, the apparatus including a seating for receiving a container of product to be dispensed, and a dispensing head in which a plunger is located for movement between a retracted position and an extended position for extruding product from a container received on the seating, the apparatus further including an actuator having an output member movable for controlling movement of the plunger between the retracted and extended positions, wherein the axis of movement of the plunger between said retracted and extend positions is offset from the axis of movement the output of the actuator, preferably wherein the apparatus has a front face and wherein the axis of movement of the actuator is to the rear of the axis of movement of the plunger with respect to the front face, and/or preferably wherein the output member is arranged for upward movement to move the plunger to its retracted position.

9. Apparatus according to any of claims 12 to 14 further including a linkage arranged for operative communication between the plunger and the output member, wherein the output member is arranged to push the linkage in order to move the plunger to its retracted position and to pull the linkage in order to drive the plunger to its extended position, preferably wherein the linkage is a cantilever movable about a fixed pivot in response to movement of the output member, and/or preferablywherein a first end of the linkage is pivotably coupled to the plunger, a second end of the linkage is pivotably connected at a fixed pivot, and the output member is coupled to the linkage between said first and second ends.

10. Apparatus according to claim 8 or claim 9 wherein the apparatus defines a housing having an upright compartment in which the actuator is located and wherein the dispensing head is located at a height generally above the actuator.

11. Apparatus according to any of claims 8 to 10 wherein the actuator has a body which is arranged for movement in the event that product within a container in the holder is too hard to be dispensed by the plunger, the apparatus including a safety switch to cut power to the actuator in the event of movement of the actuator above a predetermined threshold, preferably wherein the lower end of the actuator is associated with a trip device configured to trigger a cut off switch in the event of undue upward movement of the actuator.

12. Apparatus for dispensing food product, in particular frozen or semi-frozen confections such as ice cream and sorbet, the apparatus including a seating for receiving a container of product to be dispensed, and a dispensing head in which a plunger is located for movement between a retracted position and an extended position for extruding product from a container received on the seating, the apparatus further including an actuator having an output member movable for controlling movement of the plunger between the retracted and extended positions, wherein the apparatus defines a housing having an upright compartment in which the actuator is located and wherein the dispensing head is located at a height generally above the actuator, preferably wherein the axis of movement of the plunger between said retracted and extend positions is offset from the axis of movement the output of the actuator, and preferably wherein the apparatus has a front face and wherein the axis of movement of the actuator is to the rear of the axis of movement of the plunger with respect to the front face, and/or preferably wherein the output member is arranged for upward movement to move the plunger to its retracted position.

13. Apparatus according to claim 12 further including a linkage arranged for operative communication between the plunger and the output member, wherein the output member is arranged to push the linkage in order to move the plunger to its retracted position and to pull the linkage in order to drive the plunger to its extended position, preferably wherein the linkage is a cantilever movable about a fixed pivot in response to movement of the output member, and/or preferably wherein a first end of the linkage is pivotably coupled to the plunger, a second end of the linkage is pivotably connected at a fixed pivot, and the output member is coupled to the linkage between said first and second ends.

14. Apparatus according to claim 12 or claim 13 wherein the actuator has a body which is arranged for movement in the event that product within a container in the holder is too hard to be dispensed by the plunger, the apparatus including a safety switch to cut power to the actuator in the event of movement of the actuator above a predetermined threshold, preferably wherein the lower end of the actuator is associated with a trip device configured to trigger a cut off switch in the event of undue upward movement of the actuator.

15. Apparatus according to any of claims 1 to 6, or any of claims 8 to 11, or any of claims 12 to 14, wherein the actuator is mounted in a housing and is arranged below the plunger.

## Patentansprüche

1. Vorrichtung für die Ausgabe eines Nahrungsmittelproduktes, insbesondere von gefrorenen oder halbgefrorenen Süßwaren wie Eis und Sorbet, wobei die Vorrichtung eine Aufnahme zum Aufnehmen eines Containers des abzugebenden Produkts und einen Kolben umfasst, der für eine Bewegung zwischen einer zurückgezogenen Stellung und einer ausgezogenen Stellung eingerichtet ist, um Produkt aus einem Container, der in der Aufnahme aufgenommen ist, zu drücken, wobei die Vorrichtung ferner einen Stellantrieb zur Kontrolle der Bewegung des Kolbens zwischen den zurückgezogenen und ausgezogenen Stellungen umfasst, wobei der Stellantrieb ein Abgabeelement umfasst, welches eingerichtet ist, eine Bewegung zwischen einer ausgezogene Stellung in eine zurückgezogene Stellung auszuführen, um den Kolben in seine ausgezogene Position für den Ausgabebetrieb zu führen.

2. Vorrichtung gemäß Anspruch 1, wobei das Abgabeelement für eine Aufwärtsbewegung eingerichtet ist, um den Kolben in seine zurückgezogene Stellung zu bewegen.

3. Vorrichtung gemäß Anspruch 1 oder 2 weiterhin umfassend eine Verbindung, die für die operative Kommunikation zwischen dem Kolben und dem Abgabeelement eingerichtet ist, wobei das Abgabeelement eingerichtet ist, um die Verbindung zu drücken, um den Kolben in seine zurückgezogene Stellung zu bewegen und die Verbindung zu ziehen, um den Kolben in seine ausgefahrene Stellung zu führen, wobei die Verbindung bevorzugt ein Hebelarm ist, der als Reaktion auf eine Bewegung des Abgabeelements um einen fixierten Drehpunkt bewegbar ist und/oder wobei besonders bevorzugt ein erstes Ende der Verbindung drehbar mit dem Kolben verbunden ist, ein zweites Ende der Verbindung drehbar an einem Drehpunkt verbunden ist und das Abgabeelement mit der Verbindung zwischen dem genannten ersten und dem zweiten Ende verbunden ist.

4. Vorrichtung gemäß einem der Ansprüche 1 bis 3, wobei das Abgabeelement und der Kolben entsprechende Bewegungsachsen haben, die versetzt zueinander sind, wobei die Vorrichtung bevorzugt eine Frontseite aufweist und wobei die Bewegungsachse des Stellantriebs in Bezug auf die Frontseite hinter der Bewegungsachse des Kolbens verläuft.

5. Vorrichtung gemäß einem der vorhergehenden Ansprüche, wobei die Vorrichtung ein Gehäuse definiert, das einen aufrechten Bereich hat in dem der Stellantrieb positioniert ist und wobei der Kolben in einem Ausgabekopf auf diesem Bereich angebracht ist, wobei sich der Ausgabekopf hauptsächlich auf einer Höhe oberhalb des Stellantriebs befindet.

6. Vorrichtung gemäß einem der vorhergehenden Ansprüche, wobei der Stellantrieb einen Korpus hat, der für eine Bewegung in dem Fall eingerichtet ist, wenn das Produkt in einem Container in dem Halter zu hart ist, um durch den Kolben ausgegeben zu werden, wobei die Vorrichtung einen Sicherheitsschalter umfasst, die Stromzufuhr zum Stellantrieb zu unterbrechen, wenn die Bewegung des Stellantriebs über einen bestimmten Grenzwert hinausgeht, wobei bevorzugt das untere Ende des Stellantriebs mit einem Auslöser assoziiert ist, der so konfiguriert ist, einen Ausschalter im Falle einer übermäßigen Aufwärtsbewegung des Stellantriebs auszulösen.

7. Verfahren für die Ausgabe eines Nahrungsmittelproduktes, insbesondere von gefrorenen und halbgefrorenen Süßwaren wie Eis oder Sorbet, wobei das Verfahren Schritte der Positionierung eines Containers des abzugebenden Produkts in einen Halter und Bewegung eines Kolbens aus einer zurückgezogenen Stellung in eine ausgezogene Stellung zur Abgabe von Produkt aus einer Abgabe Öffnung des Containers umfasst, wobei die Methode weiterhin die Benutzung eines Stellantriebs umfasst, um die Bewegung des Kolbens zwischen der zurückgezogenen und der ausgezogenen Stellung zu kontrollieren, wobei der Stellantrieb ein Abgabeelement beinhaltet, das für eine Bewegung von einer ausgezogenen Stellung in eine zurückgezogenen Stellung eingerichtet ist, um den Kolben in seine ausgezogene Stellung zu führen.

8. Vorrichtung für die Ausgabe eines Nahrungsmittelproduktes, insbesondere von gefrorenen oder halbgefrorenen Süßwaren wie Eis und Sorbet, wobei die Vorrichtung eine Aufnahme zum Aufnehmen eines Containers des abzugebenden Produkts und einen Ausgabekopf umfasst, in dem sich ein Kolben befindet, zur Bewegung zwischen einer zurückgezogenen Stellung und einer ausgezogenen Stellung, um Produkt aus einem Container der in der Aufnahme aufgenommen ist, abzugeben, wobei die Vorrichtung ferner einen Stellantrieb umfasst, der ein bewegbares Abgabeelement hat, um die Bewegung des Kolbens zwischen den zurückgezogenen und ausgezogenen Stellungen zu kontrollieren, wobei die Bewegungsachse des Kolbens zwischen den zurückgezogenen und der ausgezogenen Stellungen versetzt zu der Bewegungsachse des Abgabe des Stellantriebs ist und wobei die Vorrichtung bevorzugt eine Frontseite hat und wobei die Bewegungsachse des Stellantriebs in Bezug auf die Frontseite hinter der Bewegungsachse des Kolbens verläuft und/oder wobei das Abgabeelement vorzugsweise für eine Aufwärtsbewegung eingerichtet ist, um den Kolben in seine zurückgezogene Stellung zu bewegen.

9. Vorrichtung gemäß einem der Ansprüche 12 bis 14 weiterhin umfassend eine Verbindung, die für eine operative Kommunikation zwischen dem Kolben und dem Abgabeelement eingerichtet ist, wobei das Abgabeelement eingerichtet ist, die Verbindung zu drücken, um den Kolben in seine zurückgezogene Stellung zu bewegen und die Verbindung zu ziehen, um den Kolben in seine ausgezogene Stellung zu führen, wobei die Verbindung bevorzugt ein Hebelarm ist, der als Reaktion auf eine Bewegung des Abgabeelements um einen fixierten Drehpunkt bewegbar ist und/oder wobei bevorzugt ein erstes Ende der Verbindung drehbar mit dem Kolben verbunden ist und ein zweites Ende der Verbindung drehbar an einem fixierten Drehpunkt verbunden ist und das Abgabeelement mit der Verbindung zwischen dem ersten und dem zweiten Ende verbunden ist.

10. Vorrichtung gemäß Anspruch 8 oder 9 wobei die Vorrichtung ein Gehäuse
definiert, das einen aufrechten Bereich aufweist, in dem der Stellantrieb angeordnet ist und wobei der Ausgabekopf hauptsächlich in einer Höhe oberhalb des Stellantriebs angeordnet ist.

11. Vorrichtung gemäß einem der Ansprüche 8 bis 10, wobei der Stellantrieb
einen Korpus aufweist der für eine Bewegung in den Fall eingerichtet ist, wenn das Produkt in einem Container in dem Halter zu hart ist um durch den Kolben ausgegeben zu werden, wobei die Vorrichtung einen Sicherheitsschalter umfasst, um die Stromzufuhr zum Stellantrieb zu unterbrechen, wenn die Bewegung des Stellantriebs über einen bestimmten Grenzwert hinausgeht, wobei bevorzugt das untere Ende des Stellantriebs mit einem Auslöser assoziiert ist, der so konfiguriert ist, einen Ausschalter im Falle einer übermäßigen Aufwärtsbewegung des Stellantriebs auszulösen.

12. Vorrichtung für die Ausgabe eines Nahrungsmittelproduktes, insbesondere
von gefrorenen oder halbgefrorenen Süßwaren wie Eis und Sorbet, wobei die Vorrichtung eine Aufnahme zum Aufnehmen eines Containers des abzugebenden Produkts und einen Ausgabekopf umfasst, in dem sich ein Kolben für eine Bewegung zwischen einer zurückgezogenen Stellung und einer ausgezogenen Stellung befindet, um Produkt aus dem Container, der in der Aufnahme aufgenommen ist, auszugeben, wobei die Vorrichtung ferner einen Stellantrieb umfasst, der ein Abgabeelement aufweist, das bewegbar ist, um die Bewegung des Kolbens zwischen der zurückgezogenen und der ausgezogenen Stellungen zu kontrollieren, wobei die Vorrichtung ein Gehäuse definiert, das einen aufrechten Bereich aufweist in dem der Stellantrieb angeordnet ist und wobei der Ausgabekopf hauptsächlich in einer Höhe oberhalb des Stellantriebs angeordnet ist und wobei bevorzugt die Bewegungsachse des Kolbens zwischen den zurückgezogenen und ausgezogenen Stellungen versetzt zu der Bewegungsachse des Abgabeelements des Stellantriebs ist und wobei die Vorrichtung bevorzugt eine Frontseite hat und wobei die Bewegungsachse des Stellantriebs in Bezug auf die Frontseite hinter der Bewegungsachse des Kolbens verläuft und/oder wobei das Abgabeelement eingerichtet ist, um eine Aufwärtsbewegung auszuführen, um den Kolben in seine zurückgezogene Stellung zu bewegen.

13. Vorrichtung gemäß Anspruch 12, weiterhin umfassend eine Verbindung, die für die operative Kommunikation zwischen dem Kolben und dem Abgabeelement eingerichtet ist, wobei das Abgabeelement eingerichtet ist, um die Verbindung zu drücken, um den Kolben in seine zurückgezogene Stellung zu bewegen und die Verbindung zu ziehen, um den Kolben in seine ausgezogene Stellung zu führen, wobei die Verbindung bevorzugt ein Hebelarm ist, der als Reaktion auf eine Bewegung des Abgabeelements um einen fixierten Drehpunkt bewegbar ist und/oder wobei besonders bevorzugt ein erstes Ende der Verbindung drehbar mit dem Kolben verbunden ist und ein zweites Ende der Verbindung drehbar mit einem fixierten Drehpunkt verbunden ist und das Abgabeelement mit der Verbindung zwischen diesen ersten und zweiten Ende verbunden ist.

14. Vorrichtung gemäß Anspruch 12 oder 13, wobei der Stellantrieb einen Korpus
hat, der für eine Bewegung in dem Fall eingerichtet ist, wenn das Produkt in einem Container in dem Halter zu hart ist, um durch den Kolben ausgegeben zu werden, wobei die Vorrichtung einen Sicherheitsschalter umfasst, der die Stromzufuhr zum Stellantrieb unterbricht, wenn die Bewegung des Stellantriebs über einen bestimmten Grenzwert hinausgeht, wobei bevorzugt das untere Ende des Stellantriebs mit einem Auslöser assoziiert ist, der so konfiguriert ist, einen Ausschalter im Falle einer übermäßigen Aufwärtsbewegung des Stellantriebs auszulösen.

15. Vorrichtung gemäß einem der Ansprüche 1 bis 6 oder einem der Ansprüche 8
bis 11 oder einem der Ansprüche 12 bis 14, wobei der Stellantrieb in einem Gehäuse angebracht ist und sich unterhalb des Kolbens befindet.

## Revendications

1. Appareil pour distribuer un produit alimentaire, en particulier des friandises congelées ou semi-congelées telles que la crème glacée et le sorbet, l'appareil comprenant un siège pour recevoir un récipient de produit à distribuer et un piston plongeur agencé pour se déplacer entre une position rétractée et une position étendue pour extruder le produit d'un récipient reçu sur le siège, l'appareil comprenant en outre un actionneur pour contrôler le déplacement du piston plongeur entre les positions rétractée et étendue, l'actionneur ayant un élément de sortie agencé pour le déplacement d'une position étendue à une position rétractée afin d'entraîner le piston plongeur dans sa position étendue pour une opération de distribution.

2. Appareil selon la revendication 1, dans lequel l'élément de sortie est agencé pour le mouvement ascendant afin de déplacer le piston plongeur dans sa position rétractée.

3. Appareil selon la revendication 1 ou la revendication 2, comprenant en outre une tringlerie agencée pour la communication opérationnelle entre le piston plongeur et l'élément de sortie, dans lequel l'élément de sortie est agencé pour pousser la tringlerie afin de déplacer le piston plongeur dans sa position rétractée et pour tirer la tringlerie afin d'entraîner le piston plongeur dans sa position étendue, de préférence dans lequel la tringlerie est un porte-à-faux mobile entre un pivot fixe en réponse au déplacement de l'élément de sortie, et/ou de préférence dans lequel une première extrémité de la tringlerie est couplée de manière pivotante au piston plongeur, une seconde extrémité de la tringlerie est raccordée de manière pivotante à un pivot fixe, et l'élément de sortie est couplé à la tringlerie entre les première et seconde extrémités.

4. Appareil selon l'une quelconque des revendications 1 à 3, dans lequel l'élément de sortie et le piston plongeur ont des axes de déplacement respectifs qui sont décalés l'un par rapport à l'autre, de préférence, dans lequel l'appareil a une face avant et dans lequel l'axe de déplacement de l'actionneur est vers l'arrière de l'axe de déplacement du piston plongeur par rapport à la face avant.

5. Appareil selon l'une quelconque des revendications précédentes, dans lequel l'appareil définit un boîtier ayant un compartiment droit dans lequel l'actionneur est positionné, et dans lequel le piston plongeur est monté dans une tête de distribution sur ledit compartiment, dans lequel la tête de distribution est positionnée à une hauteur généralement au-dessus de l'actionneur.

6. Appareil selon l'une quelconque des revendications précédentes, dans lequel l'actionneur a un corps qui est agencé pour le déplacement dans le cas dans lequel le produit à l'intérieur d'un récipient dans le support est trop dur à distribuer par le piston plongeur, l'appareil comprenant un commutateur de sécurité pour arrêter le courant arrivant à l'actionneur en cas de déplacement de l'actionneur supérieur à un seuil prédéterminé, de préférence dans lequel l'extrémité inférieure de l'actionneur est associée à un dispositif de déplacement configuré pour déclencher un commutateur d'arrêt en cas de déplacement ascendant excessif de l'actionneur.

7. Procédé pour distribuer un produit alimentaire, en particulier des friandises congelées ou semi-congelées telles que la crème glacée et le sorbet, le procédé comprenant les étapes consistant à positionner un récipient de produit à distribuer dans un support, et déplacer un piston plongeur d'une position rétractée à une position étendue pour extruder le produit par une sortie dans le récipient, le procédé comprenant en outre l'étape consistant à utiliser un actionneur pour contrôler le déplacement du piston plongeur entre les positions rétractée et étendue, l'actionneur ayant un élément de sortie agencé pour le déplacement d'une position étendue à une position rétractée afin d'entraîner le piston plongeur dans sa position étendue.

8. Appareil pour distribuer un produit alimentaire, en particulier des friandises congelées ou semi-congelées telles que la crème glacée et le sorbet, l'appareil comprenant un siège pour recevoir un récipient de produit à distribuer, et une tête de distribution dans laquelle un piston plongeur est positionné pour le déplacement entre une position rétractée et une position étendue pour extruder le produit d'un récipient reçu sur le siège, l'appareil comprenant en outre un actionneur ayant un élément de sortie mobile pour contrôler le déplacement du piston plongeur entre les positions rétractée et étendue, dans lequel l'axe de déplacement du piston plongeur entre lesdites positions rétractée et étendue est décalé de l'axe de déplacement de sortie de l'actionneur, de préférence dans lequel l'appareil a une face avant et dans lequel l'axe de déplacement de l'actionneur est vers l'arrière de l'axe de déplacement du piston plongeur par rapport à la face avant, et/ou de préférence dans lequel l'élément de sortie est agencé pour le déplacement ascendant afin de déplacer le piston plongeur dans sa position rétractée.

9. Appareil selon l'une quelconque des revendications 12 à 14, comprenant en outre une tringlerie agencée pour la communication opérationnelle entre le piston plongeur et l'élément de sortie, dans lequel l'élément de sortie est agencé pour pousser la tringlerie afin de déplacer le piston plongeur dans sa position rétractée et pour tirer la tringlerie afin d'entraîner le piston plongeur dans sa position étendue, de préférence dans lequel la tringlerie est un porte-à-faux mobile entre un pivot fixe en réponse au déplacement de l'élément de sortie, et/ou de préférence dans lequel une première extrémité de la tringlerie est couplée de manière pivotante au piston plongeur, une seconde extrémité de la tringlerie est raccordée de manière pivotante à un pivot fixe, et l'élément de sortie est couplé à la tringlerie entre lesdites première et seconde extrémités.

10. Appareil selon la revendication 8 ou 9, dans lequel l'appareil définit un boîtier ayant un compartiment droit dans lequel l'actionneur est positionné et dans lequel la tête de distribution est positionnée à une hauteur généralement supérieure à l'actionneur.

11. Appareil selon l'une quelconque des revendications 8 à 10, dans lequel l'actionneur a un corps qui est agencé pour le déplacement dans le cas dans lequel le produit à l'intérieur d'un récipient dans le support est trop dur à distribuer par le piston plongeur, l'appareil comprenant un commutateur de sécurité pour arrêter le courant arrivant à l'actionneur dans le cas d'un déplacement de l'actionneur supérieur à un seuil prédéterminé, de préférence dans lequel l'extrémité inférieure de l'actionneur est associée à un dispositif de déplacement configuré pour déclencher un commutateur d'arrêt en cas de mouvement ascendant excessif de l'actionneur.

12. Appareil pour distribuer un produit alimentaire, en particulier des friandises congelées ou semi-congelées telles que la crème glacée et le sorbet, l'appareil comprenant un siège pour recevoir un récipient de produit à distribuer, et une tête de distribution dans laquelle un piston plongeur est positionné pour le déplacement entre une position rétractée et une position étendue pour extruder le produit d'un récipient reçu sur le siège, l'appareil comprenant en outre un actionneur ayant un élément de sortie mobile pour contrôler le mouvement du piston plongeur entre les positions rétractée et étendue, dans lequel l'appareil définit un boîtier ayant un compartiment droit dans lequel l'actionneur est positionné et dans lequel la tête de distribution est positionnée à une hauteur généralement supérieure à l'actionneur, de préférence dans lequel l'axe de déplacement du piston plongeur entre lesdites positions rétractée et étendue est décalé par rapport à l'axe de déplacement de la sortie de l'actionneur, et de préférence dans lequel l'appareil a une face avant et dans lequel l'axe de déplacement de l'actionneur est vers l'arrière de l'axe de déplacement du piston plongeur par rapport à la face avant et/ou de préférence dans lequel l'élément de sortie est agencé pour le mouvement ascendant afin de déplacer le piston plongeur dans sa position rétractée.

13. Appareil selon la revendication 12, comprenant en outre une tringlerie agencée pour la communication opérationnelle entre le piston plongeur et l'élément de sortie, dans lequel l'élément de sortie est agencé pour pousser la tringlerie afin de déplacer le piston plongeur dans sa position rétractée et pour tirer la tringlerie afin d'entraîner le piston plongeur dans sa position étendue, de préférence dans lequel la tringlerie est un porte-à-faux mobile entre un pivot fixe en réponse au déplacement de l'élément de sortie, et/ou de préférence dans lequel une première extrémité de la tringlerie est couplée de manière pivotante au piston plongeur, une seconde extrémité de la tringlerie est raccordée de manière pivotante à un pivot fixe, et l'élément de sortie est couplé à la tringlerie entre lesdites première et seconde extrémités.

14. Appareil selon la revendication 12 ou la revendication 13, dans lequel l'actionneur a un corps qui est agencé pour le déplacement dans le cas dans lequel le produit à l'intérieur d'un récipient dans le support est trop dur à distribuer par le piston plongeur, l'appareil comprenant un commutateur de sécurité pour couper le courant arrivant à l'actionneur dans le cas du déplacement de l'actionneur supérieur à un seuil prédéterminé, de préférence dans lequel l'extrémité inférieure de l'actionneur est associée à un dispositif de déplacement configuré pour déclencher un commutateur d'arrêt dans le cas du déplacement ascendant excessif de l'actionneur.

15. Appareil selon l'une quelconque des revendications 1 à 6, ou l'une quelconque des revendications 8 à 11, ou l'une quelconque des revendications 12 à 14, dans lequel l'actionneur est monté dans un boîtier et est agencé au-dessous du piston plongeur.
